# EUROPEAN PATENT APPLICATION

(11) **EP 4 742 381 A1**
(43) Date of publication of application: **13.05.2026**
(21) Application number: 25192401.5
(22) Date of filing: 29.07.2025
(51) Int. Cl.: H01M 50/105, H01M 50/178, H01M 50/55, H01M 50/553, H01M 50/593, H01M 50/595

(54) **SECONDARY BATTERY**

(30) Priority: 07.11.2024 KR 20240156690
(71) Applicant: SAMSUNG SDI CO., LTD., Yongin-si, Gyeonggi-do 17084 (KR)
(72) Inventor: SONG, Ho Jin, 17084 Yongin-si, Gyeonggi-do (KR); LEE, Je Hyun, 17084 Yongin-si, Gyeonggi-do (KR); SONG, Jung Yeon, 17084 Yongin-si, Gyeonggi-do (KR)
(74) Representative: Gulde & Partner

(57) **Abstract**

A secondary battery includes an electrode assembly including a positive electrode plate, a negative electrode plate, and a separator, a lead part electrically connected to the electrode assembly, a case accommodating the electrode assembly, and a reinforcing member inside the case, the reinforcing member surrounding a connection portion of the electrode assembly, the lead part and an edge of the electrode assembly.

## Description

### BACKGROUND

### 1. Field

The present disclosure relates to a secondary battery.

### 2. Description of the Related Art

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly including a positive electrode and a negative electrode, a case accommodating the same, and electrode terminals connected to the electrode assembly.

The above information disclosed in this Background section is only for enhancement of understanding of the background of the invention and therefore it may contain information that does not constitute prior art.

### SUMMARY

Embodiments include a secondary battery, including an electrode assembly including a positive electrode plate, a negative electrode plate, and a separator, a lead part electrically connected to the electrode assembly, a case accommodating the electrode assembly, and a reinforcing member inside the case, the reinforcing member wrapping around or surrounding a connection portion of the electrode assembly, the lead part and an edge of the electrode assembly. Hence, due to the reinforcing member wrapping around or surrounding the connection portion of the electrode assembly, the lead part and the edge of the electrode assembly, the structure of the secondary battery is reinforced without protruding from the case.

The positive electrode plate, the negative electrode plate, and the separator may be stacked. An advantage of this embodiment may be that the reinforcement member can wrap around or surround an electrode assembly with stacked electrode plates and separator more efficiently without creating unused free volumes.

The reinforcing member may include a tape attached to an exterior of the electrode assembly. An advantage of this embodiment may be that the electrode assembly and the reinforcement member can be handled more easily, e.g. when assembling the secondary battery.

The reinforcing member may include an adhesive and a synthetic resin, the synthetic resin being selected from polyethylene terephthalate, polypropylene, and polyimide. An advantage of this embodiment may be that the electrode assembly and the reinforcement member can be handled more easily, e.g. when assembling the secondary battery.

The reinforcing member may include a first reinforcing member, a second reinforcing member, a third reinforcing member and/or a fourth reinforcing member. The first reinforcing member may wrap around or surround the edge of the electrode assembly on a first side of a length-wise direction of the electrode assembly, the connection portion of the electrode assembly and the lead part. The second reinforcing member may wrap around or surround the edge of the electrode assembly on a second side of the length-wise direction of the electrode assembly. The third reinforcing member may wrap around or surround the edge of the electrode assembly on one side of a width-wise direction of the electrode assembly. The fourth reinforcing member may wrap around or surround the edge of the electrode assembly on another side of the width-wise direction of the electrode assembly. An advantage of this embodiment may be that at least one edge of the electrode assembly that may be more prone do deformation by mechanical overload, is reinforced.

The first reinforcing member may include a first base and/or a first cover. The first base may be in contact with a lower side of the electrode assembly. The first cover may be in contact with an upper side of the electrode assembly. The first cover may be in contact with the first base. The first cover may wrap around or surround an upper edge of the electrode assembly together with the first base. An advantage of this embodiment may be that the electrode assembly is further protected from undesired deformation.

The first reinforcing member may further include a fixing layer. The fixing layer may be arranged on the lower side of the first base. The first reinforcing member may have an adhesive component and may be fixed to the case. An advantage of this embodiment may be that the first reinforcing member, when fixed to the case, may further facilitate handling the reinforcing member and the case, e.g. when assembling the secondary battery.

One side of the first cover may be fixed to the upper side of the electrode assembly. The first cover may be pressed, e.g. by a work roller, to bond the first base and the first cover. An advantage of this embodiment may be that attachment or fixation of the first cover to the first base is improved by pressing. Pressing the first cover by a work roller may improve attachment or fixation of the first cover to the first base while reducing the risk of damage to the first cover and/or the first base.

The first reinforcing member may further include an insulation part including an insulating material. The first reinforcing member may extend between the lead part and the case. The first reinforcing member may be fixed to the case with an adhesive component. An advantage of this embodiment may be that electrically insulating the case is facilitates during assembly of the secondary battery and/or electrical insulation of the case is better maintained.

The first reinforcing member may include a first reinforcing sub-member and/or a second reinforcing sub-member. The first reinforcing sub-member may cover a positive electrode tab of the electrode assembly. The second reinforcing sub-member may cover a negative electrode tab of the electrode assembly. The first reinforcing sub-member and the second reinforcing sub-member may be spaced apart from each other. An advantage of this embodiment may be that the reinforcing member may mechanically reinforce at least one electrode tab of the secondary battery.

Another embodiment of the disclosure may include a secondary battery, including an electrode assembly including a positive electrode plate, a negative electrode plate, and a separator, a lead part electrically connected to the electrode assembly, a case accommodating the electrode assembly, and a reinforcing member inside the case, the reinforcing member wrapping around a connection portion of the electrode assembly, the lead part, an edge of the electrode assembly, and at least one of an upper side and a lower side of the electrode assembly. Hence, due to the reinforcing member wrapping around or surrounding the connection portion of the electrode assembly, the lead part, the edge of the electrode assembly and at least one of an upper side or a lower side of the electrode assembly, the structure of the secondary battery is reinforced without protruding from the case.

The reinforcing member may include a first reinforcing member, a second reinforcing member, a third reinforcing member, a fourth reinforcing member and/or a fifth reinforcing member. The first reinforcing member may wrap around the edge of the electrode assembly on a first side of a length-wise direction of the electrode assembly, the connection portion of the electrode assembly and the lead part. The second reinforcing member may wrap around the edge of the electrode assembly on a second side of the length-wise direction of the electrode assembly. The third reinforcing member may wrap around the edge of the electrode assembly on one side of a width-wise direction of the electrode assembly. The fourth reinforcing member may wrap around the edge of the electrode assembly. The fifth reinforcing member may wrap around at least one of an upper side and a lower side of the electrode assembly. An advantage of this embodiment may be that various sides or edges of the electrode assembly can be reinforced as desired.

The first reinforcing member may include a single reinforcing member wrapping around a positive electrode tab of the electrode assembly and a negative electrode tab of the electrode assembly. An advantage of this embodiment may be that the first reinforcing member can be mounted easily.

The first reinforcing member may include a first reinforcing sub-member and/or a second reinforcing sub-member. The first reinforcing sub-member may wrap around the positive electrode tab of the electrode assembly. The second reinforcing sub-member may wrap around the negative electrode tab of the electrode assembly. The first reinforcing sub-member and the second reinforcing sub-member may be spaced apart from each other. An advantage of this embodiment may be that the reinforcing member may mechanically reinforce at least one electrode tab of the secondary battery.

The first reinforcing member may include a first base and/or a first cover. The first base may be in contact with the lower side of the electrode assembly. The first cover may be in contact with the upper side of the electrode assembly. The first cover may be in contact with the first base. The first cover may wrap around or surround an upper edge of the electrode assembly and the first base. An advantage of this embodiment may be that the electrode assembly is further protected from undesired deformation.

The first reinforcing member may further include a fixing layer on a lower side of the first base. The fixing layer may have an adhesive component. The fixing layer may be fixed to the case. An advantage of this embodiment may be that the first reinforcing member, when fixed to the case, may further facilitate handling the reinforcing member and the case, e.g. when assembling the secondary battery.

The first reinforcing member may further include an insulation part. The insulation part may include an insulating material. The insulation part may extend between the lead part and the case. The insulation part may be fixed to the case with an adhesive component. An advantage of this embodiment may be that handling the reinforcing member and the case, e.g. when assembling the secondary battery, is facilitated.

The fifth reinforcing member may wrap around the lower side of the electrode assembly. An advantage of this embodiment may be that the electrode assembly can be further reinforced.

The fifth reinforcing member may overlap at least one of the first to fourth reinforcing members. An advantage of this embodiment may be that gaps between reinforcing members may be avoided.

The reinforcing member may include an adhesive and a synthetic resin, the synthetic resin being selected from polyethylene terephthalate, polypropylene, and polyimide. An advantage of this embodiment may be that the electrode assembly and the reinforcement member can be handled more easily, e.g. when assembling the secondary battery.

However, the technical problems to be achieved in the embodiment of the disclosure are not limited to the technical problems mentioned above, and other technical problems not mentioned herein will be clearly understood from the following description by those skilled in the art to which the disclosure belongs.

However, the effects achievable through the present invention are not limited to those described above, and other technical effects not mentioned can be clearly understood by those skilled in the art from the description of the invention provided above.

### BRIEF DESCRIPTION OF DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.

Features will become apparent to those of ordinary skill in the art by describing in detail exemplary embodiments with reference to the attached drawings, in which:
FIG. 1 is a perspective view showing a secondary battery according to an embodiment of the present disclosure;
FIG. 2 is a perspective view showing a state in which an electrode assembly according to an embodiment of the present disclosure is separated from a case;
FIG. 3 is a front-sectional view of the secondary battery according to an embodiment of the present disclosure;
FIG. 4 is a front-sectional view showing a state in which a reinforcing member according to an embodiment of the present disclosure is fixed to a case;
FIG. 5 is a cross-sectional view showing the upper side of the reinforcing member in the secondary battery according to an embodiment of the present disclosure;
FIG. 6 is a cross-sectional view showing the lower side of the reinforcing member in the secondary battery according to an embodiment of the present disclosure;
FIG. 7 is a front elevation showing a state in which a first cover is installed on the upper side and a first base is installed on the lower side in a cross-sectional view, in the electrode assembly according to an embodiment of the present disclosure;
FIG. 8 is a front elevation showing a state in which a work roller presses the first cover while moving in a cross-sectional view, according to an embodiment of the present disclosure;
FIG. 9 is a plan view showing the reinforcing member and the work roller in a cross-sectional view, according to an embodiment of the present disclosure;
FIG. 10 is a cross-sectional view showing the upper side of a reinforcing member in a secondary battery according to another embodiment of the present disclosure;
FIG. 11 is a plan elevation showing the reinforcing member and a work roller in a cross-sectional view, according to another embodiment of the present disclosure;
FIG. 12 is a cross-sectional view showing the upper side of the reinforcing member in the secondary battery according to another embodiment of the present disclosure;
FIG. 13 is a cross-sectional view showing the lower side of the reinforcing member in the secondary battery according to another embodiment of the present disclosure;
FIG. 14 is a cross-sectional view showing the upper side of a reinforcing member in a secondary battery according to another embodiment of the present disclosure;
FIG. 15 is a cross-sectional view showing the lower side of the reinforcing member in the secondary battery according to another embodiment of the present disclosure;
FIGS. 16A and 16B are perspective views showing a battery pack including an exemplary secondary battery according to the present disclosure;
FIGS. 17A and 17B are, respectively, a perspective view and a side view showing a vehicle including an exemplary battery pack according to the present disclosure.

### DETAILED DESCRIPTION

Example embodiments will now be described more fully hereinafter with reference to the accompanying schematic drawings; however, they may be embodied in different forms and should not be construed as limited to the embodiments set forth herein. Rather, these embodiments are provided so that this disclosure will be thorough and complete, and will fully convey exemplary implementations to those skilled in the art.

It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present.

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, the embodiments described in the specification and the configurations described in the drawings are only the most preferred embodiments of the present disclosure, and do not represent all of the technical ideas of the present disclosure. It is to be understood that there may be various equivalents and variations in place of them at the time of filing the present application. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the invention, the attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from the spirit and scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component disposed on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

As used herein, the terms are for describing embodiments of the present disclosure and are not intended to limit the disclosure.

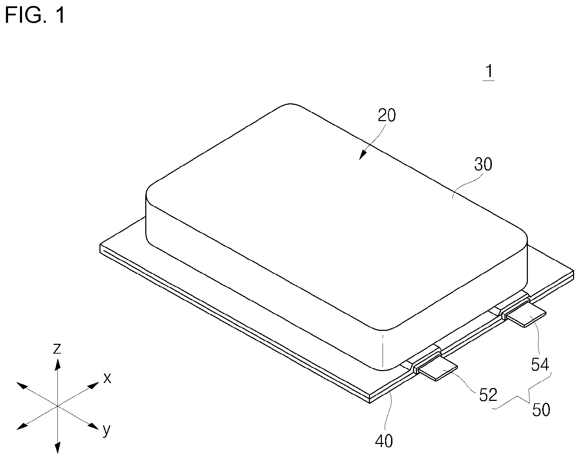

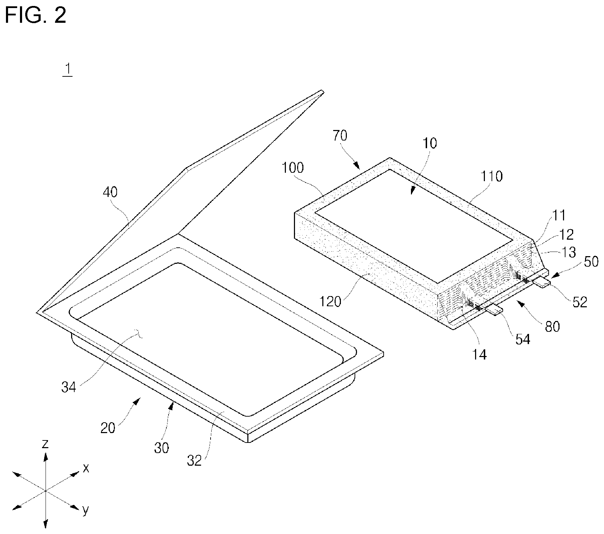

FIG. 1 is a perspective view exemplarily showing a secondary battery 1 according to an embodiment of the present disclosure, and FIG. 2 is a perspective view showing a state in which an electrode assembly 10 according to an embodiment of the present disclosure is separated from a case 20.

FIG. 2 exemplarily shows the secondary battery 1 of FIG. 1 turned over and opened. In addition, FIG. 2 exemplarily shows a possible state before a lead part 50 is bent into a "V" shape. In a state in which the upper part of the electrode assembly 10 including the lead part 50 is wrapped with a first reinforcing member 80 to be described later, bending of the lead part 50 may be made. That is, an electrode tab 14 and the exterior side of the lead part 50 may be covered by the first reinforcing member 80. In a state in which installation of the first reinforcing member 80 may be completed, the lead part 50 may be bent so as to be positioned between a case cover 40 and a sealing part 32. Accordingly, the electrode tab 14 and the lead part 50 may be bent into a "V" shape.

A portion where the electrode tab 14 is located in the electrode assembly 10, is defined as the upper part of the electrode assembly 10. The upper part of the electrode assembly 10 is located on one side in the length-wise direction of the electrode assembly 10.

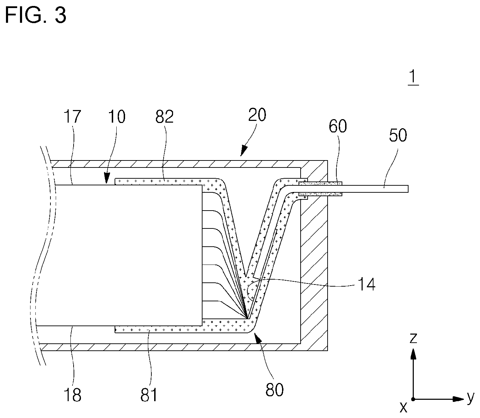

As shown in FIGS. 1 and 2, the secondary battery 1 according to an embodiment of the present disclosure may include the electrode assembly 10, a case 20, the lead part 50, and a reinforcing member 70. As an example, the secondary battery 1 may further include an insulation tape 60 (see FIG. 3).

According to the present disclosure, by attaching a tape to the electrode assembly 10 of the secondary battery 1, thermal shrinkage of a separator can be prevented and safety from external impact can be improved. Installation of the reinforcing member 70 can increase the structural rigidity of the secondary battery 1 and improve productivity.

The electrode assembly 10 includes a positive electrode plate 11, a negative electrode plate 12, and a separator 13. The electrode assembly 10 may be formed in a stack type or a jelly-roll type. For example, in the stack type electrode assembly 10, the positive electrode plate 11, the negative electrode plate 12, and the separator 13 are alternately stacked. In addition, the jelly-roll type electrode assembly 10 may be formed in a roll shape in which a negative electrode part, a positive electrode part, and the separator 13 are wound.

The electrode assembly 10 according to an embodiment of the present disclosure is accommodated in the case 20 and includes the positive electrode plate 11, the negative electrode plate 12, and the separator 13 disposed between the positive electrode plate 11 and the negative electrode plate 12, and has the electrode tab 14 formed on one side (e.g., an end) in the length-wise direction (Y-axis direction). In the present disclosure, the case 20 may be referred to as a pouch.

The electrode assembly 10 may be accommodated inside a pouch together with an electrolyte. Here, the electrolyte may include a lithium salt such as LiPF6, LibF4, etc. in an organic solvent such as ethylene carbonate (EC), propylene carbonate (PC), diethyl carbonate (DEC), ethyl methyl carbonate (EMC), dimethyl carbonate (DMC), etc.

The positive electrode plate 11 may be provided with the electrode tab 14 of a positive electrode electrically connected to the positive electrode uncoated portion, and the negative electrode plate 12 may be provided with the electrode tab 14 of a negative electrode electrically connected to the negative electrode uncoated portion. The electrode tab 14 may be welded to the lead part 50 and electrically connected to an exterior side. The insulation tape 60 (see FIG. 3) may be attached to the lead part 50 for insulation with a pouch.

The positive electrode plate 11 is a plate-shaped plate made of aluminum (Al), and a positive electrode active material made of a transition metal oxide is coated on at least one surface of the positive electrode plate 11. In addition, a positive electrode uncoated portion on which the positive electrode active material is not coated may be provided on one side of the positive electrode plate 11.

The negative electrode plate 12 is a plate-shaped plate made of copper (Cu) or nickel (Ni), and a negative electrode active material made of graphite or carbon is coated on at least one surface of the negative electrode plate 12. In addition, a negative electrode uncoated portion on which the negative electrode active material is not coated may be provided on one side of the negative electrode plate 12.

The separator 13 may be polyethylene (PE) or polypropylene (PP), but other materials are possible. The separator 13 can prevent electrical shorting between the positive electrode plate 11 and the negative electrode plate 12 and only allow the movement of lithium ions.

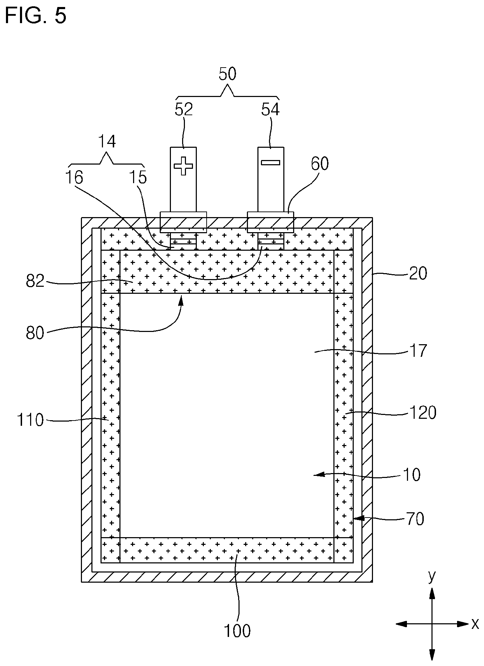

The electrode tab 14 extending to one side of the length-wise direction (Y-axis direction) of the electrode assembly 10 includes a positive electrode tab 15 and a negative electrode tab 16 (see FIG. 5). The positive electrode tab 15 is electrically connected to the positive electrode plate 11, and the negative electrode tab 16 is electrically connected to the negative electrode plate 12.

One side of the lead part 50 is electrically connected to the electrode tab 14, and the other side of the lead part 50 extends to an exterior side of the case 20 (see FIG. 3). The lead part 50 includes a positive electrode lead 52 and a negative electrode lead 54 (see FIG. 2). The positive electrode tab 15 is electrically connected to the positive electrode lead 52, and the negative electrode tab 16 is electrically connected to the negative electrode lead 54 (see FIG. 5).

The case 20 may be transformed into various shapes within the technical concept of accommodating the electrode assembly 10. The case 20 may be installed in such a shape as to wrap around the exterior side of the electrode assembly 10.

In the present disclosure, a pouch made of a soft film is used as the case 20. The pouch may be formed by folding a rectangular film extending in the length-wise direction (Y-axis direction) to form a case body 30 and a case cover 40 (see FIG. 2).

After the electrode assembly 10 is accommodated in a recess 34 provided in the case body 30, the case cover 40 is rotated to shield an opened entrance of the case body 30. In the present disclosure, the pouch may be other than in an integral form in which the case body 30 and the case cover 40 are formed on a single film. However, for the convenience of explanation, the following description will be made as an example in which the case body 30 and the case cover 40 are formed on a single rectangular film.

In addition, the case body 30 may include the recess 34 and the sealing part 32. The case body 30 may have the recess 34 in which the electrode assembly 10 is accommodated at approximately the center, and may include the sealing part 32 extending approximately outwardly from three sides of the recess 34.

The sealing part 32 may be a surface parallel to and coupled to the case cover 40. For example, when the case body 30 and the case cover 40 are formed as separate members, the sealing part 32 may extend outwardly from the four sides of the recess 34. Of course, even when the case body 30 and the case cover 40 are integrally formed, the sealing part 32 may extend outwardly from the four sides of the recess 34.

The case cover 40 and the case body 30 may be formed of a multilayer film including a metal film and an insulating layer formed on one side and the other side of the metal film, respectively. The surface where case cover 40 and case body 30 come into contact with each other is defined as the inner surface, and the opposite surface is defined as the outer surface.

The recess 34 of the case body 30 is formed to a size enough to accommodate the electrode assembly 10 through a press or drawing process, etc. The case body 30 may be covered by the case cover 40 at a portion where the recess 34 is formed, and the edge of the recess 34 and the edge of the case cover 40 may then be heat-welded to each other. After the electrode assembly 10 is accommodated in the recess 34, the pouch may be sealed by sealing the edge area of the case body 30 and the edge area of the case cover 40.

For convenience, the edge of the case body 30 located on the outer side of the plane centered on the edge of the case cover 40 and the recess 34 is defined as the sealing part 32. The inner surface of the pouch may be formed with a heat-sealing layer made of a heat-sealing material.

The case cover 40 may have a rectangular flat plate shape. The case cover 40 is connected to the case body 30 and may cover the upper part of the case body 30 by a folding operation.

The reinforcing member 70 is located inside the case 20. The reinforcing member 70 is a member installed while wrapping around a connection portion between the electrode assembly 10 and the lead part 50 and the edge of the electrode assembly 10, and may be transformed into various shapes. The reinforcing member 70 may be a tape or film attached to the exterior side of the electrode assembly 10 and may be formed in a form in which an adhesive is applied to a synthetic resin selected from polyethylene terephthalate (PET), polypropylene (PP), and polyimide (PI). In addition, the reinforcing member 70 may have a plurality of holes formed to allow an electrolyte to move. For example, the reinforcing member 70 may include a first reinforcing member 80, a second reinforcing member 100, a third reinforcing member 110, and a fourth reinforcing member 120.

FIG. 3 is a front-sectional view of the secondary battery 1 according to an embodiment of the present disclosure. As shown in FIG. 3, the first reinforcing member 80 is installed in such a shape as to wrap around the edge of the electrode assembly 10 located on one side of the length-wise direction (the Y-axis direction) of the electrode assembly 10 and the connection portion of the electrode assembly 10 and the lead part 50. In addition, the first reinforcing member 80 is installed in such a shape as to wrap around the end of the electrode assembly 10 connected to the electrode tab 14.

The first reinforcing member 80 may be formed by attaching a tape to wrap around the upper part of the electrode assembly 10. The first reinforcing member 80 protects the portion where the separator 13 is exposed, the electrode tab 14, and the lead part 50 welded to the electrode tab 14. When the first reinforcing member 80 is installed on the electrode assembly 10, the length of the first reinforcing member 80 covering the electrode assembly 10 may be configured so as not to exceed half (1/2) of the total length of the electrode assembly 10 in the length-wise direction (Y-axis direction).

The first reinforcing member 80 may include a plurality of members, and for example, the first reinforcing member 80 may include a first base 81 and a first cover 82. The first cover 82 and the first base 81 are fixed in a state of being in contact with each other with the electrode assembly 10 interposed therebetween.

The first base 81 is in contact with the lower side of the electrode assembly 10 and is installed in such a shape as to wrap around the electrode tab 14 and the lower part of the lead part 50. The first base 81 may be made of a tape or a film, and, by including an adhesive component, may be fixed in a state of being in contact with the electrode assembly 10, the electrode tab 14, and the lead part 50. The first base 81 may have a width-wise direction (X-axis direction) length that is the same as the width-wise direction (X-axis direction) length of the electrode assembly 10. One side of the first base 81 may be in contact with a lower side 18 of the electrode assembly 10, and the other side of the first base 81 may be in contact with the lower part of the lead part 50. The adhesive component used for the first base 81 may be a conductive epoxy, a thermosetting resin, or a UV-curable resin, which ensures firm bonding with the electrode assembly 10.

The first cover 82 is in contact with the upper side 17 of the electrode assembly 10 and the first base 81, and is a member that wraps around the upper edge of the electrode assembly 10 together with the first base 81, and may be transformed into various shapes. The first cover 82 may be made of a tape or a film. The first cover 82 may have a width-wise direction (X-axis direction) length that is the same as the width-wise direction (X-axis direction) length of the electrode assembly 10. One side of the first cover 82 may be in contact with an upper side 17 of the electrode assembly, and the other side of the first cover 82 may be in contact with the upper part of the lead part 50. By including an adhesive component, the first cover 82 may be fixed in a state of being in contact with the electrode assembly 10, the electrode tab 14, and the lead part 50. The adhesive components used for the first cover 82 and the first base 81 are the same or interchangeable, thereby providing consistent bonding strength. The first cover 82 and the first base 81 may have the same length in the width-wise direction (X-axis direction).

The insulation tape 60 is located between lead part 50 and case 20, and is a member that can be fixed to an exterior side of lead part 50 and may be transformed into various shapes. The insulation tape 60 is installed on each side of the lead part 50 facing case 20. The insulation tape 60 is made of an insulating material such as polyimide (PI), polyester (PET), or polypropylene (PP), and by installation of the insulation tape 60, an electrical connection between the lead part 50 and the case 20 may be blocked.

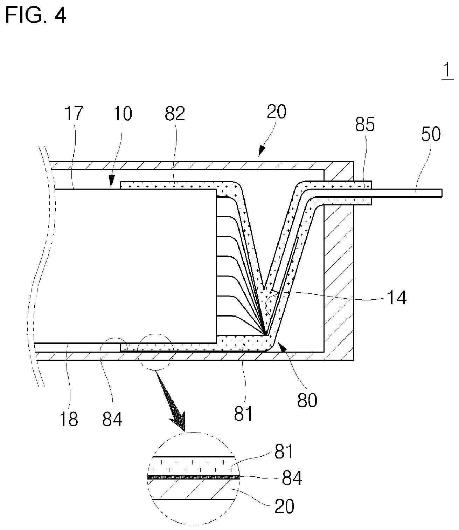

FIG. 4 is a front-sectional view showing a state in which the reinforcing member 70 according to an embodiment of the present disclosure is fixed to the case 20. As shown in FIG. 4, the first base 81 may be fixed to the case 20 located on the lower side. For example, the first reinforcing member 80 is installed on the lower side of the first base 81 and may include a fixing layer 84 including an adhesive component. The fixing layer 84 may include an adhesive such as a conductive epoxy, a thermosetting resin, or a UV curable resin, and the adhesive provides high adhesive strength and excellent heat resistance to stably fix the first base 81 to the case 20. The fixing layer 84 may fix the first base 81 to the case 20. The upper side of the first base 81 is fixed to the electrode assembly 10, and the lower side thereof is fixed to the case 20, and thus excessive movement of the electrode assembly 10 within the case 20 can be suppressed.

The first reinforcing member 80 may include an insulation part 85 that functions as an insulation tape. The insulation part 85 is made of an insulating material and extends between the lead part 50 and the case 20. In addition, the insulation part 85 is fixed to the case 20 by means of an adhesive component. The insulation part 85 may be made of an insulating material such as polyimide (PI), polyester (PET), or polypropylene (PP), which provides high insulation and heat resistance to enhance the safety of a battery. The insulation part 85 may be connected to the first base 81 and the first cover 82 or formed integrally therewith.

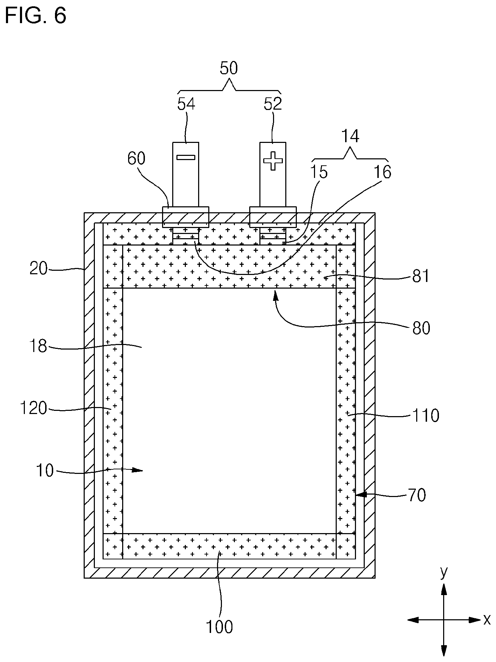

FIG. 5 is a cross-sectional view showing the upper side of the reinforcing member 70 in the secondary battery 1 according to an embodiment of the present disclosure, and FIG. 6 is a cross-sectional view showing the lower side of the reinforcing member 70 (e.g., flipping FIG. 5 by 180 degrees) in the secondary battery 1 according to an embodiment of the present disclosure. As shown in FIGS. 5 and 6, the first reinforcing member 80 may be installed while wrapping around the positive electrode tab 15 and the negative electrode tab 16 of the electrode assembly 10 by using a single member. A single tape/film extending in the width-wise direction (X-axis direction) of the electrode assembly 10 covers the upper sides of the positive electrode tab 15 and negative electrode tab 16 of the electrode assembly 10, and another single tape/film corresponding thereto covers the lower sides of the positive electrode tab 15 and negative electrode tab 16 of the electrode assembly 10.

The second reinforcing member 100 wraps around the edge of the electrode assembly 10 located on the other side in the length-wise direction (Y-axis direction) of the electrode assembly 10, and may be transformed into various shapes. For example, the second reinforcing member 100 may have a lower tape attached to wrap around the lower part of the electrode assembly 10. The second reinforcing member 100 is installed so as not to exceed half (1/2) of the total length-wise direction (Y-axis direction) length of the electrode assembly 10. The width-wise direction (X-axis direction) length of the second reinforcing member 100 may be equal to the width-wise direction (X-axis direction) length of the electrode assembly 10.

The third reinforcing member 110 wraps around the edge of the electrode assembly 10 located on one side of the width-wise direction (X-axis direction) of the electrode assembly 10, and may be transformed into various shapes. The third reinforcing member 110 is installed so as not to exceed half (1/2) of the total width-wise direction (X-axis direction) length of the electrode assembly 10, and the length-wise direction (Y-axis direction) length thereof may be equal to the length-wise direction (Y-axis direction) length of the electrode assembly 10.

The fourth reinforcing member 120 wraps around the edge of the electrode assembly 10 located on the other side in the width-wise direction (X-axis direction) of the electrode assembly 10, and may be transformed into various shapes. The fourth reinforcing member 120 is installed so as not to exceed half (1/2) of the total width-wise direction (X-axis direction) of the electrode assembly 10, and the length-wise direction (Y-axis direction) thereof may be equal to the length-wise direction (Y-axis direction) of the electrode assembly 10.

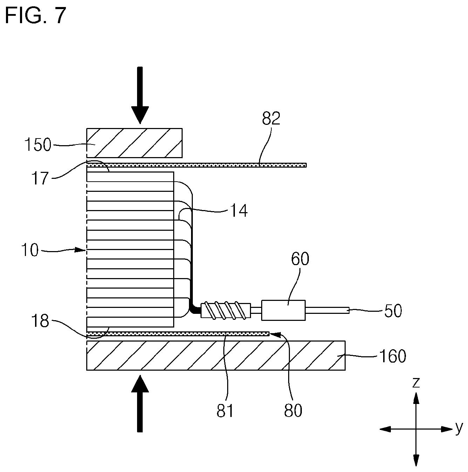

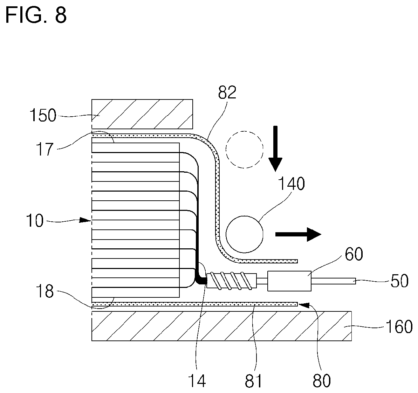

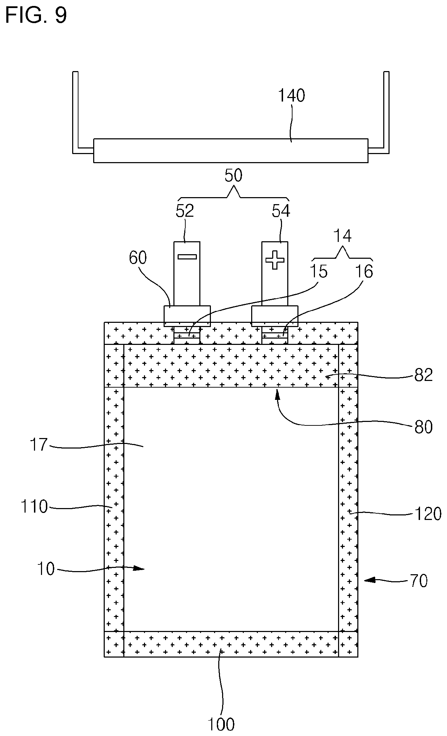

FIG. 7 is a front view showing a state in which the first cover 82 is installed on the upper side and the first base 81 is installed on the lower side, in the electrode assembly 10 according to an embodiment of the present disclosure, FIG. 8 is a front view showing a state in which a work roller 140 presses the first cover 82 while moving, according to an embodiment of the present disclosure, and FIG. 9 is a plan view showing the reinforcing member 70 and the work roller 140, according to an embodiment of the present disclosure. As shown in FIGS. 7 to 9, the first base 81 and the first cover 82 may form the first reinforcing member 80 by an upper jig 150, a lower jig 160, and the work roller 140.

One side of the first cover 82 is fixed to the upper side of the electrode assembly 10. The first cover 82 is fixed in a state of being in contact with the upper side 17 of the electrode assembly, and the upper jig 150 presses the first cover 82 toward the electrode assembly 10. The other side of the first cover 82 extends laterally and protrudes outwardly from the electrode assembly 10.

One side of the first base 81 is in contact with the lower side 18 of the electrode assembly, and the other side of the first base 81 extends laterally. The lower part of the first base 81 is supported by the lower jig 160.

The work roller 140 transforms the shape of the first cover 82 by applying pressure to the first cover 82 protruding outwardly from the electrode assembly 10. As the work roller 140 applies pressure to the first cover 82 toward the lower side, the first cover 82 is bent in such a shape as to wrap around the end of the electrode assembly 10.

In addition, the work roller 140 pressurizes the first cover 82 while moving laterally on the upper side of the lead part 50 or the electrode tab 14 connected to the lead part 50. In this process, the first base 81 and the first cover 82 can be joined by the work roller (140).

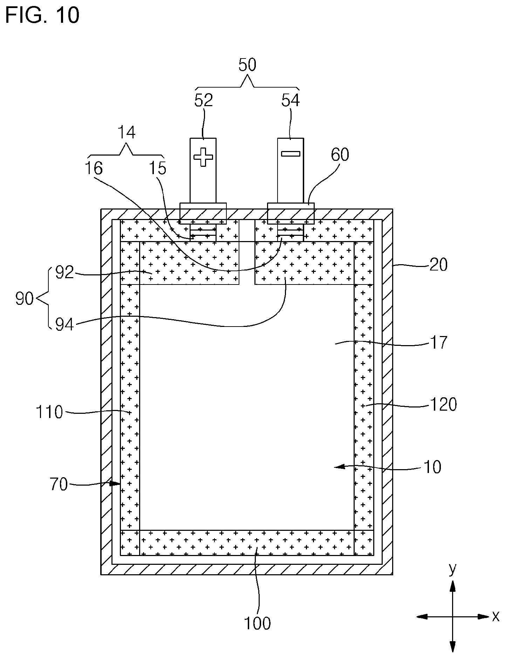

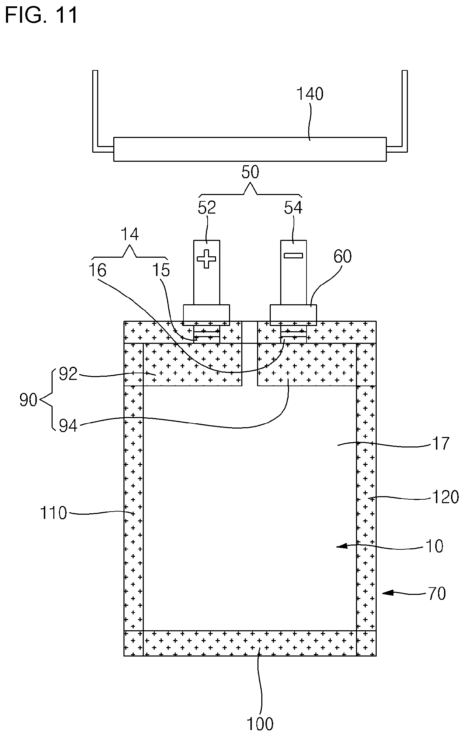

FIG. 10 is a cross-sectional view showing the upper side of a reinforcing member 70 in a secondary battery 1 according to another embodiment of the present disclosure, and FIG. 11 is a plan view showing the reinforcing member 70 and a work roller 140, according to another embodiment of the present disclosure. As shown in FIGS. 10 and 11, the first reinforcing member 90 may include a first reinforcing sub-member 92 wrapping around a positive electrode tab 15 of an electrode assembly 10 and a second reinforcing sub-member 94 wrapping around a negative electrode tab 16 of the electrode assembly 10. In some examples, the first reinforcing sub-member 92 and the second reinforcing sub-member 94 may be installed in a state of being spaced apart from each other.

The first reinforcing sub-member 92 may be installed in such a shape as to wrap around the upper edge of the electrode assembly 10 and the positive electrode tab 15 and a portion of a positive electrode lead 52. The first reinforcing sub-member 92 may include two tapes and is configured to be bonded to each other with the electrode assembly 10 disposed therebetween, and the detailed configuration thereof is similar or identical to that of the first reinforcing member 90, and thus a detailed description thereof is omitted.

The second reinforcing sub-member 94 may be installed in such a shape as to wrap around the upper edge of the electrode assembly 10 and the negative electrode tab 16 and a portion of a negative electrode lead 54. The second reinforcing sub-member 94 may include two tapes and is configured to be bonded to each other with the electrode assembly 10 disposed therebetween, and the detailed configuration thereof is similar or identical to that of the first reinforcing member 90, and thus a detailed description thereof is omitted.

Since the first reinforcing sub-member 92 and the second reinforcing sub-member 94 are installed in a state of being spaced apart from each other, an electrolyte may move more smoothly to the electrode assembly 10 through a separate space, thereby improving the ion conductivity of a battery and improving charge/discharge efficiency. In addition, since an electrolyte can be uniformly distributed in the electrode assembly 10, the electrochemical performance of the battery can be maintained more stably.

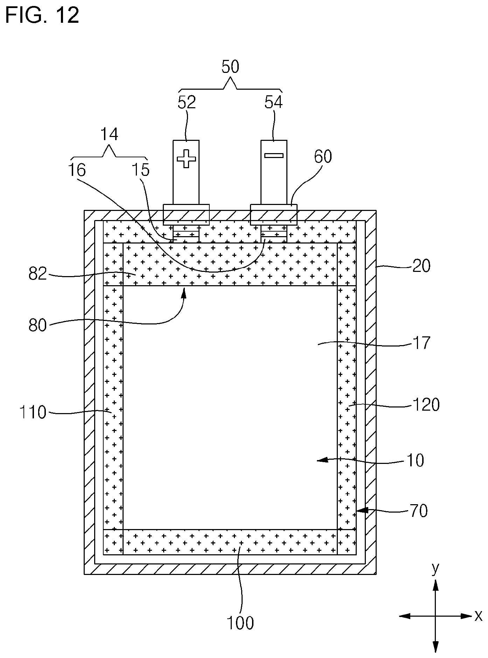

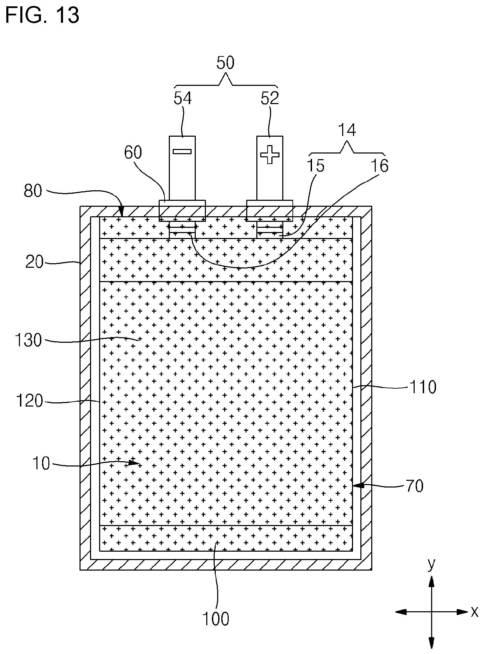

FIG. 12 is a cross-sectional view showing the upper side of the reinforcing member 70 in a secondary battery 1 according to another embodiment of the present disclosure, and FIG. 13 is a cross-sectional view showing the lower side of the reinforcing member 70 in the secondary battery 1 according to another embodiment of the present disclosure. As shown in FIGS. 12 and 13, a separate reinforcing tape may be additionally installed for the structural rigidity of the reinforcing member 70. For example, the reinforcing member 70 may be installed to wrap around at least one of the connection portion of the electrode assembly 10 and the lead part 50, the edge of the electrode assembly 10, and the upper side and lower side of the electrode assembly 10. The reinforcing member 70 may further include a fifth reinforcing member 130.

For example, the fifth reinforcing member 130 may be installed in such a shape as to wrap around the lower side of the electrode assembly 10, which protects the lower side of the electrode assembly 10 and distributes the pressure applied to the electrode assembly 10, thereby improving the durability of a battery. The fifth reinforcing member 130 may be installed to overlap at least one of the first reinforcing member 80, the second reinforcing member 100, the third reinforcing member 110, and the fourth reinforcing member 120 on a lower side 18 of the electrode assembly 10, increasing the bonding strength between the reinforcing members and thereby strengthening the overall structural integrity of the battery. In addition, the fifth reinforcing member 130 forms an additional protective layer under the electrode assembly 10 to increase resistance to external impact.

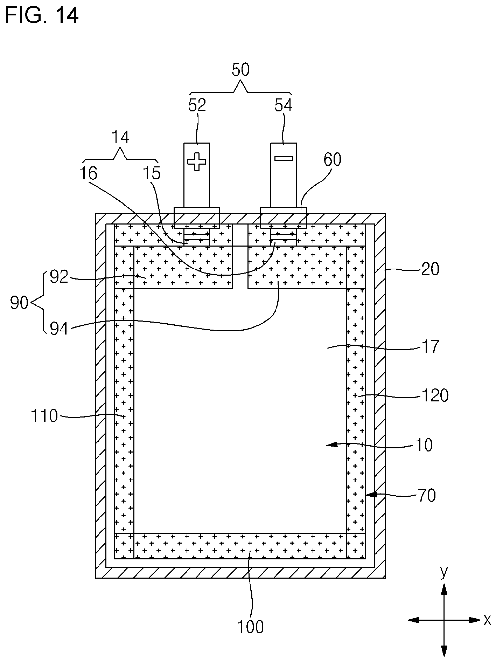

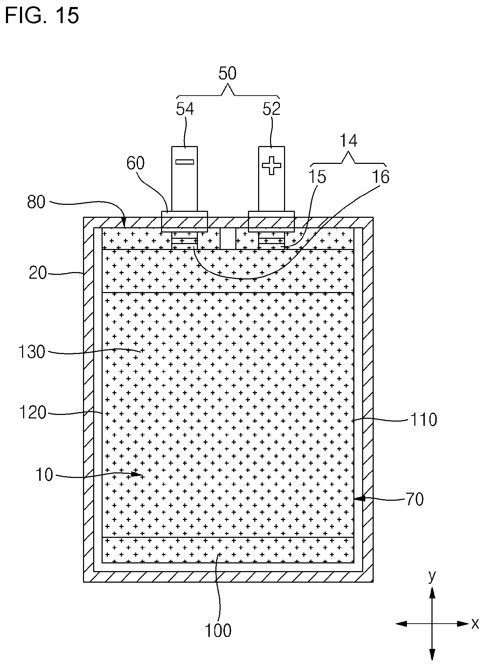

FIG. 14 is a cross-sectional view showing the upper side of a reinforcing member 70 in a secondary battery 1 according to another embodiment of the present disclosure, and FIG. 15 is a cross-sectional view showing the lower side of the reinforcing member 70 in the secondary battery 1 according to another embodiment of the present disclosure. As shown in FIGS. 14 and 15, the reinforcing member70 includes a first reinforcing member 90, a second reinforcing member 100, a third reinforcing member 110, a fourth reinforcing member 120, and a fifth reinforcing member 130. The first reinforcing member 90 includes a first reinforcing sub-member 92 and a second reinforcing sub-member 94, which are centrally spaced apart from each other, and serves to improve the mobility of an electrolyte.

The fifth reinforcing member 130 covers the lower surface of the electrode assembly 10, reinforces the bonding strength among the reinforcing members 70, and increases resistance to external impact.

The first reinforcing sub-member 92, the second reinforcing sub-member 94, and the fifth reinforcing member 130 have been described above, and thus detailed descriptions thereof are omitted.

The electrode assembly 10 of the present disclosure will now be described in more detail.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{d}O₄(0.90≤a≤1.8, 0.001≤b≤0.1); LiₐMn_{1-g}G_{g}PO₄(0.90≤a≤1.8, 0≤g≤0.5); Li_{(3-f})Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt% to about 99 wt% of a negative electrode active material, about 0.5 wt% to about 5 wt% of a binder, and about 0 wt% to about 5 wt% of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent may act as a medium through which ions involved in the electrochemical reaction of the battery is capable of moving.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

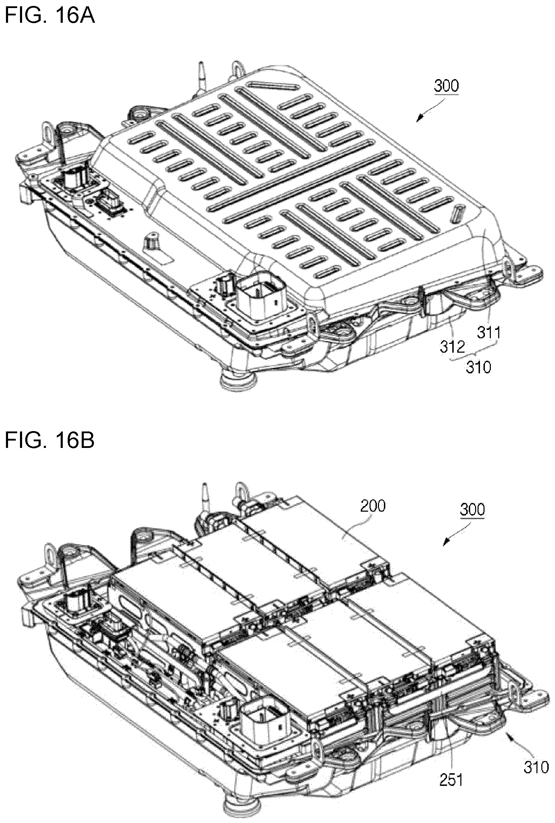

The batteries according to the above-described embodiments may be used to manufacture a battery pack. FIGS. 16A and 16B are perspective views showing a battery pack including the exemplary secondary battery according to the present disclosure. Referring to FIGS. 16A and 16B, the battery pack 300 may include a plurality of battery modules 200 and a housing 310 to accommodate the plurality of battery modules 200. For example, the housing 310 may include a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

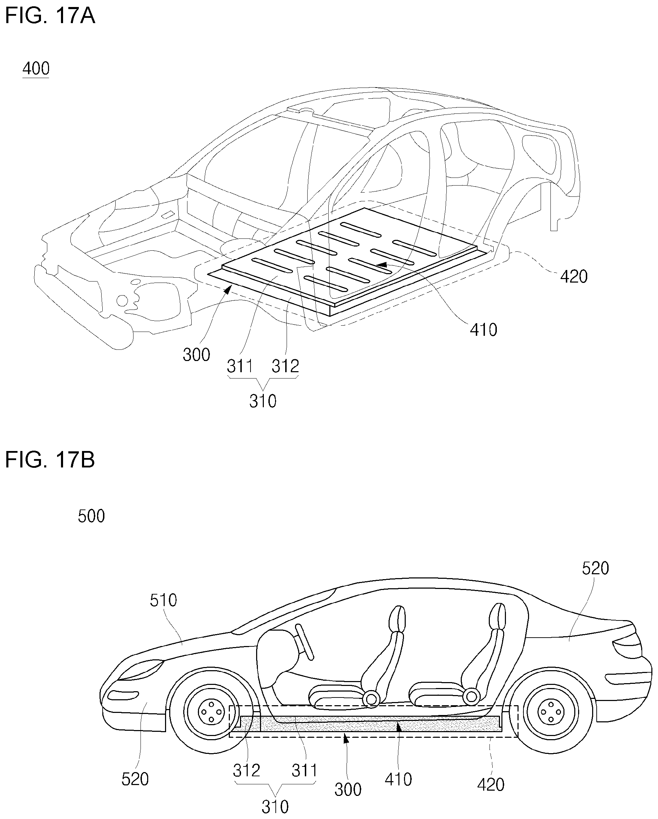

FIGS. 17A and 17B are, respectively, a perspective view and a side view showing vehicles 400 and 500 including the battery pack 300 (exemplary) according to the present disclosure.

In FIG. 17A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 17B, the vehicle 500 can be assembled with additional components such as a hood 510 at the front of the body of vehicle 500 and fenders 520 located at the front and rear of the vehicle. The vehicle 500 includes the battery pack 300 including the battery pack cover 311 and the pack frame 312, and the battery pack 300 can be coupled to the body of vehicle 500.

Although a few embodiments of the present disclosure have been shown and described, it would be appreciated by those skilled in the art that various changes and modifications may be made in this embodiment without departing from the principles and technical idea of the disclosure.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (1), comprising:
an electrode assembly (10) including a positive electrode plate (11), a negative electrode plate (12), and a separator (13);
a lead part (50) electrically connected to the electrode assembly (10);
a case (20) accommodating the electrode assembly (10); and
a reinforcing member (70) inside the case (20), the reinforcing member (70) wrapping around or surrounding a connection portion of the electrode assembly (10), the lead part (50) and an edge of the electrode assembly (10).

2. The secondary battery (1) as claimed in claim 1, wherein the reinforcing member (70) includes a tape attached to an exterior of the electrode assembly (10), and/or wherein the reinforcing member (70) includes an adhesive and a synthetic resin, the synthetic resin being selected from polyethylene terephthalate, polypropylene, and polyimide..

3. The secondary battery (1) as claimed in claim 1 or 2, wherein the reinforcing member (70) comprises:
a first reinforcing member (80) wrapping around the edge of the electrode assembly (10) on a first side of a length-wise direction of the electrode assembly (10), the connection portion of the electrode assembly (10) and the lead part (50);
a second reinforcing member (100) wrapping around the edge of the electrode assembly (10) on a second side of the length-wise direction of the electrode assembly (10);
a third reinforcing member (110) wrapping around the edge of the electrode assembly (10) on one side of a width-wise direction of the electrode assembly (10); and
a fourth reinforcing member (120) wrapping around the edge of the electrode assembly (10) on another side of the width-wise direction of the electrode assembly (10).

4. The secondary battery (1) as claimed in any of claims 1 to 3, wherein the first reinforcing member (80) comprises:
a first base (81) in contact with a lower side (18) of the electrode assembly (10); and
a first cover (82) in contact with an upper side (17) of the electrode assembly (10) and the first base (81), the first cover (82) wrapping around an upper edge of the electrode assembly (10) together with the first base (81).

5. The secondary battery (1) as claimed in claim 3 when depending from claim 3, wherein the first reinforcing member (80) further comprises a fixing layer (84) on the lower side (18) of the first base (81), the reinforcing member (70) having an adhesive component and being fixed to the case (20).

6. The secondary battery (1) as claimed in claim 4 or 5, wherein:
one side of the first cover (82) is fixed to the upper side (17) of the electrode assembly (10), and
the first cover (82) is pressed to bond the first base (81) and the first cover (82).

7. The secondary battery (1) as claimed in any of claims 3 to 6, wherein the first reinforcing member (80) further comprises an insulation part (85) including an insulating material, the first reinforcing member (80) extending between the lead part (50) and the case (20) and being fixed to the case (20) with an adhesive component.

8. The secondary battery (1) as claimed in any of claims 3 to 7, wherein the first reinforcing member (80) comprises:
a first reinforcing sub-member covering a positive electrode tab (15) of the electrode assembly (10); and
a second reinforcing sub-member (94) covering a negative electrode tab (16) of the electrode assembly (10),
wherein the first reinforcing sub-member and the second reinforcing sub-member (94) are spaced apart from each other.

9. The secondary battery (1) as claimed in any of claims 1 to 3, wherein
an electrode assembly (10) including a positive electrode plate (11), a negative electrode plate (12), and a separator (13);
a lead part (50) electrically connected to the electrode assembly (10);
a case (20) accommodating the electrode assembly (10); and
the reinforcing member (70) wraps around or surrounds at least one of an upper side (17) and a lower side (18) of the electrode assembly (10).

10. The secondary battery (1) as claimed in claim 9 when depending from claim 3, wherein the first reinforcing member (80) includes a single reinforcing member (70) wrapping around a positive electrode tab (15) of the electrode assembly (10) and a negative electrode tab (16) of the electrode assembly (10).

11. The secondary battery (1) as claimed in claim 9 or 10 when depending from claim 3, wherein the first reinforcing member (80) comprises:
a first reinforcing sub-member wrapping around a positive electrode tab (15) of the electrode assembly (10); and
a second reinforcing sub-member (94) wrapping around a negative electrode tab (16) of the electrode assembly (10),
wherein the first reinforcing sub-member and the second reinforcing sub-member (94) are spaced apart from each other.

12. The secondary battery (1) as claimed in any of claims 9 to 11 when depending from claim 3, wherein the first reinforcing member (80) comprises:
a first base (81) in contact with the lower side (18) of the electrode assembly (10); and
a first cover (82) in contact with the upper side (17) of the electrode assembly (10) and the first base (81), the first cover (82) wrapping around an upper edge of the electrode assembly (10) and the first base (81).

13. The secondary battery (1) as claimed in claim 12, wherein the first reinforcing member (80) further comprises a fixing layer (84) on the lower side (18) of the first base (81), the fixing layer (84) having an adhesive component and being fixed to the case (20).

14. The secondary battery (1) as claimed in any of claims 9 to 13 when depending from claim 3, wherein the first reinforcing member (80) further comprises an insulation part (85) including an insulating material, the insulation part (85) extending between the lead part (50) and the case (20) and being fixed to the case (20) with an adhesive component.

15. The secondary battery (1) as claimed in any of claims 9 to 14 when depending from claim 3, wherein the reinforcing member (80) comprises a fifth reinforcing member (130), wherein the fifth reinforcing member (130) wraps around at least one of the upper side (17) and the lower side (18) of the electrode assembly (10), and/or wherein the fifth reinforcing member (130) wraps around the lower side (18) of the electrode assembly (10), and/or wherein the fifth reinforcing member (130) overlaps at least one of the first reinforcing member (80) to the fourth reinforcing member (120).
